# EUROPEAN PATENT APPLICATION

(11) **EP 2 083 357 A1**
(43) Date of publication of application: **29.07.2009**
(21) Application number: 08150350.0
(22) Date of filing: 17.01.2008
(51) Int. Cl.: G06F 11/00

(54) **Systems and methods for maintaining data integrity of storage media of an electronic device**

(71) Applicant: Research In Motion Limited, Waterloo, Ontario N2L 3W8 (CA)
(72) Inventor: Wood, Robert, Waterloo Ontario N2L 6M2 (CA); Rathee, Nevin K., Waterloo Ontario N2J 4N4 (CA); Duff, Robert W., Waterloo Ontario N2V 2J6 (CA)
(74) Representative: Rickard, David John

(57) **Abstract**

The described embodiments relate generally to methods, systems and devices for maintaining data integrity of storage media of a handheld electronic device, particularly when such device may be dropped, for example, i.e. subject to some unintended motion, which may cause the power supply to the storage media to be interrupted or terminated.

## Description

The described embodiments relate generally to methods and systems for maintaining data integrity of a removable media card of an electronic device, particularly when such electronic device is subject to uncontrolled movement such as being dropped or thrown or resulting from a traffic collision or the like. Described embodiments also relate to an electronic device employing such systems and methods.

Mobile devices often provide multimedia functionality. Because of their size, static and moving digital images and sound files (among other types of data files) are commonly stored on data storage media cards usually employing flash memory (and accordingly sometimes referred to as flash memory cards) or other non-volatile data storage that can be electrically erased and reprogrammed. Occasionally, the user of the mobile device may accidentally drop the mobile device or the device may be subject to some uncontrolled, unintended or rapid motion such as an acceleration or a change in direction of movement resulting from, for example, being thrown or the result of a traffic collision. To reduce the damage caused by such uncontrolled or unintended motions, some mobile devices are configured to permit the battery compartment to open to allow the ejection of the battery. However, as discussed below, the untimely interruption of power to a media card may result in the loss of the data stored on the card.

In many instances, such media cards are formatted with a FAT (file allocation table) file system. Given the ubiquitous nature of FAT file systems, this ensures interoperability with a wide range of systems and devices. A file allocation table stores organizational data indicating, among other things, sector addresses where different segments of each data file are stored on the media card.

An inherent weakness of the FAT file system is that a data sector can only be modified with a "read-modify-erase-write" operation. As a result, a catastrophic event (such as a power loss, or untimely removal of the media card) during an update of the allocation table could result in the entire allocation table being lost. In such a circumstance, the operating system would be unable to locate and hence access the data in the data files, despite the fact that such data would likely still exist.

A backup copy of the allocation table may be used to mitigate against such data loss, but various implementations of FAT file systems either utilize such a backup either inconsistently or not at all. Further, some flash memory devices may store both copies of the allocation table in the same sector, thereby risking loss of both copies simultaneously.

Similarly, the directory entries stored on the media card are also at risk, and are scattered throughout the disk. These entries do not benefit from the FAT redundancy (which as mentioned is inconsistently used).

It is desired to address or ameliorate the risk of data loss resulting from unintended motion such as, for example, the dropping of a mobile device (and potential resulting power loss).

### BRIEF DESCRIPTION OF THE DRAWINGS

For a better understanding of the described embodiments and to show more clearly how they may be carried into effect, reference will now be made, by way of example, to the accompanying drawings in which:

FIG. 1 is a block diagram of a mobile device in one example implementation;

FIG. 2 is a block diagram of a communication sub-system component of the mobile device of FIG. 1;

FIG. 3 is a block diagram of a node of a wireless network;

FIG. 4 is a schematic diagram showing in further detail various components of the mobile device of FIG. 1, including components related to the freefall detector;

FIG. 5A is a schematic diagram showing the housing of the mobile device of FIG. 1, with the barrier in a closed position;

FIG. 5B is a schematic diagram showing the housing of the mobile device of FIG. 1, with the barrier in an open position; and

FIG. 6 is a flowchart of a method for maintaining the data integrity of the storage media of the mobile device.

### GENERAL

The described embodiments relate generally to methods, systems and devices for maintaining data integrity of data stored on storage media of a handheld electronic device, particularly when such electronic device is subject to an unintended motion such as being dropped, for example, the impact of which may result in an interruption to the power supply.

Certain embodiments may relate to a method for maintaining data integrity of data stored on storage media of a handheld electronic device, the device having a detector configured to detect when the electronic device is moving such as in freefall or subject to a sudden change in direction of movement and a processor operatively coupled to the storage media and to the detector. The method includes detecting when the electronic device is moving and updating the data stored on the storage media. The data stored on the storage media may include file allocation table data and the updating may involve updating the file allocation table data.

The electronic device may also comprise a housing and a power supply port located within the housing and wherein the power supply port is configured to releasably receive a power supply module. The power supply module may be a battery and the power supply port may be a battery compartment.

The method may also comprise providing a sensory indicator to the user upon detection of the freefall of the electronic device. The sensory indicator may comprise an audible tone.

Further embodiments may relate to a handheld electronic device comprising a housing, a detector operatively coupled to the housing and configured to detect when the electronic device is moving such as in freefall or subject to a sudden change in direction of movement, for example" a processor operatively coupled to the detector and memory storage. The memory storage may be accessible to the processor and configured to store data, and the memory storage is further configured to store program code executable by the processor for executing a media memory preservation application. The media memory preservation application may be configured to cause the processor to update the stored data.

The processor may be responsive to the detector, and the processor is configured to execute the media memory preservation application upon the detector detecting that the device is moving. The detector may be configured to generate signals upon detecting that the device is moving, and the processor is configured to receive the signals. The processor may be configured to execute the media memory preservation application upon receiving the signals.

The memory storage may comprise a storage media card such as a flash memory card.

The device may further comprise a power supply port located within the housing which is configured to releasably receive a power supply module which may be a battery. The power supply port is preferably configured to release the power supply module upon the device being involved in a collision. The device may also include a compartment within the housing, wherein the power supply port is positioned within the compartment. The device may comprise a barrier movable from a closed position to an open position, wherein in the closed position access to the compartment is restricted. The barrier may comprise a compartment cover. As well, the stored data may comprise a file allocation table.

The detector may comprise an accelerometer for detecting when the device is subject to an acceleration and/or it may comprise a freefall detector for detecting when the device is in freefall, having been dropped, for example. Alternatively to the device comprising an accelerometer or freefall detector or in addition to such detector, there may be provided an inertial detector for detecting a change in a direction of movement of said device. The inertial detector may comprise a gyroscope.

The foregoing and further features of the invention will be apparent from the appended claims.

### DESCRIPTION OF PREFERRED EMBODIMENTS

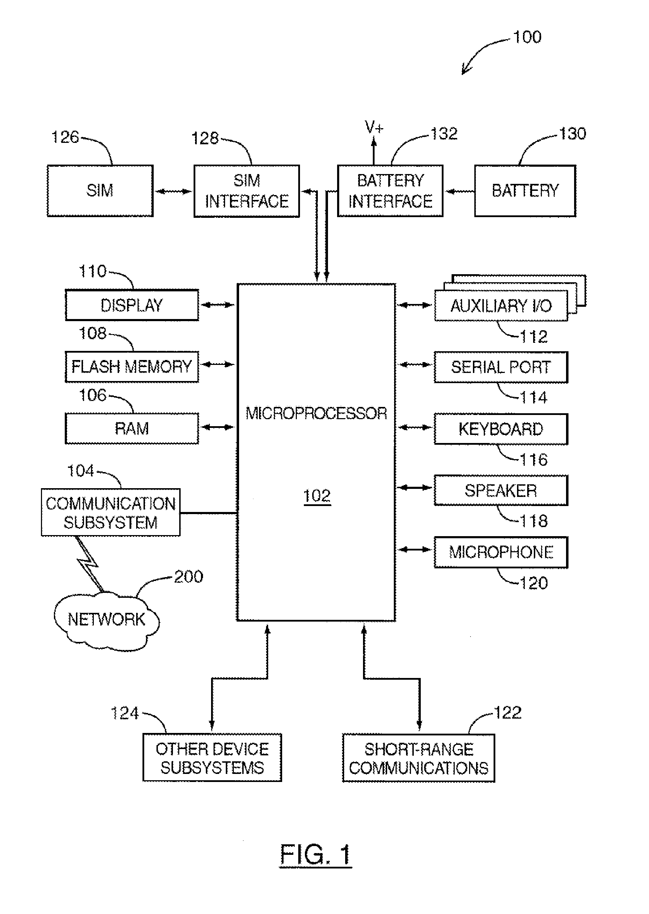

The handheld electronic device may be a mobile device that communicates with other devices. To aid the reader in understanding the structure of the mobile device and how it communicates with other devices, reference is made to FIGS. 1 through 3, by way of example only.

Referring first to FIG. 1, a block diagram of a mobile device in one example implementation is shown generally as 100. Mobile device 100 comprises a number of components, the controlling component being microprocessor 102. Microprocessor 102 is typically programmed with an operating system 103 and controls the overall operation of mobile device 100. In some embodiments, certain communication functions, including data and voice communications, are performed through communication subsystem 104. Communication subsystem 104 receives messages from and sends messages to a wireless network 200.

In this example implementation of mobile device 100, communication subsystem 104 is configured for cellular communication in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS).

New standards are still being defined, but it is believed that they will have similarities to the network behavior described herein, and it will also be understood by persons skilled in the art that the described embodiments are intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems.

Microprocessor 102 also interacts with additional subsystems such as the device's 100 memory storage 105 which may include a Random Access Memory (RAM) 106 and flash memory 108, display 110, auxiliary input/output (I/O) subsystem 112, serial port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator, media player or task list. Operating system software 103 code used by microprocessor 102 is typically stored in a persistent store such as flash memory 108, which may alternatively be a read-only memory (ROM) or similar storage element (not shown). Those skilled in the art will appreciate that the operating system code 103, specific device applications, or parts thereof, may be temporarily loaded into a volatile store such as RAM 106.

In some embodiments, mobile device 100 may send and receive communication signals over network 200 after required network registration or activation procedures have been completed. Network access is associated with a subscriber or user of a mobile device 100. To identify a subscriber, mobile device 100 requires a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200.

By inserting SIM 126 into SIM interface 128, a subscriber can access all subscribed services. Services could include: web browsing media transfers, such as music and/or image downloading or streaming, and messaging, such as e-mail, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information. In certain embodiments, SIM 126 may comprise a different type of user identifier and may be integral to mobile device 100 or not present at all.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112.

Auxiliary I/O subsystem 112 may include devices such as: a touch screen, mouse, track ball, infrared fingerprint detector, and one or more roller wheels with dynamic button pressing capability. Keyboard 116 comprises an alphanumeric keyboard and/or telephone-type keypad. A composed item may be transmitted over network 200 through communication subsystem 104. User input components comprised in auxiliary I/O subsystem 112 may be used by the user to navigate and interact with a user interface of mobile device 100.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

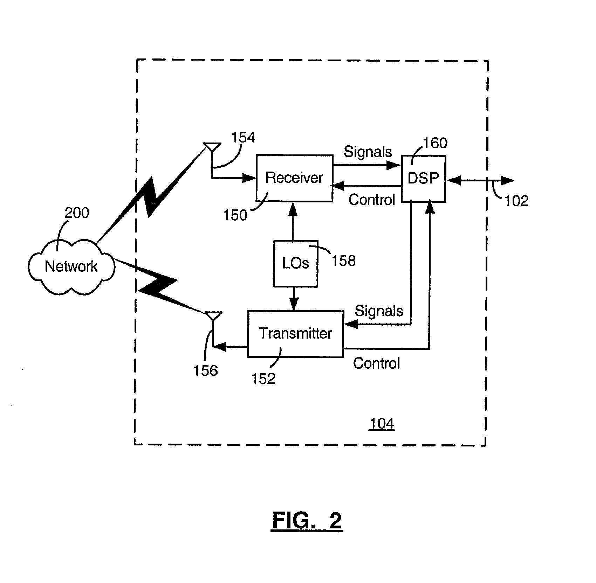

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

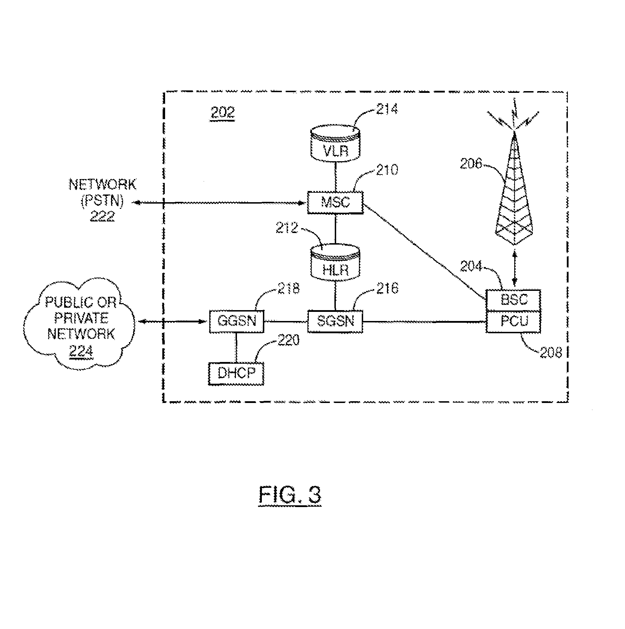

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218.

There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

Embodiments of mobile device 100 may be equipped and configured for communication over a cellular connection via communication subsystem 104 and with a wireless local area network (WLAN) using a communication form commonly termed "Wi-Fi". Such Wi-Fi connections may employ a suitable WLAN-compatible communication technology, of which unlicensed mobile access (UMA) technology is one example. UMA technology provides access to GSM and GPRS mobile services over unlicensed spectrum technologies, including Bluetooth^{™} and 802.11 wireless connections. UMA enables cellular network subscribers to roam and hand over between cellular networks and public and private wireless networks using dual-mode mobile handsets. Mobile device 100 may also be configured for communication with local wireless devices, such as Bluetooth^{™} enabled devices and may be configured for communication in a global positioning system (GPS) context.

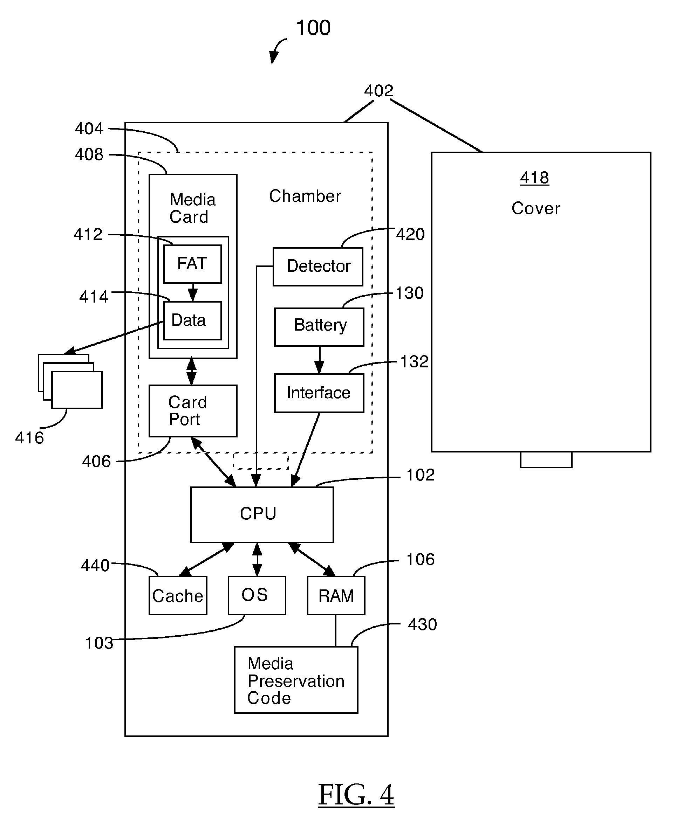

The configuration and operation of an electronic device, such as mobile device 100, in the context of maintaining data integrity of storage media if the device 100 is dropped, is described in further detail in relation to FIGS. 4 to 9. The embodiments described in relation to FIGS. 4 to 9 are primarily concerned with reducing the risk of corruption of the data stored on storage media in the event the device 100 is dropped.

Referring now to FIG. 4, components of mobile device 100 are shown and described in further detail. The device 100 includes a housing 402, typically formed of plastic or other suitable material for retaining and protecting the various components of the device 100. A chamber 404 is typically provided within the housing 402, and is configured to retain one or more media ports 406 together with one or more media cards 408, which comprise part of the device's 100 memory storage 105. In some configurations (as shown in the illustrated example), the chamber 404 may comprise or be in the form of a battery compartment for releasably storing a power supply module in the form of a battery 130 and battery port or power interface 132 operatively coupled to the microprocessor 102.

As will be understood, the media port 406 is configured to removably receive and operatively engage the media card 408, enabling removal and replacement of the data storage 410 provided by the media card 408. The media port 406 is also operatively coupled to the CPU 102, thereby permitting the CPU 102 (and operating system 103 stored in memory storage 105) to access the data storage 410 on the media card 408. In operation, the media card 408 is typically "mounted" and hence accessible by the operating system 103.

As noted previously, typically the media card 408 is formatted with a FAT file system structure. Accordingly, the media card data storage 410 may include both a file allocation table 412, together with the general file data storage 414 indexed by the table 412 which may also store the various directory entries. While the data storage 410 may store most types of data files, often the media card 408 is used to store large multimedia data files 416, such as static or moving digital image files or sound files. However, as will be understood, other data storage structures or formats may be used.

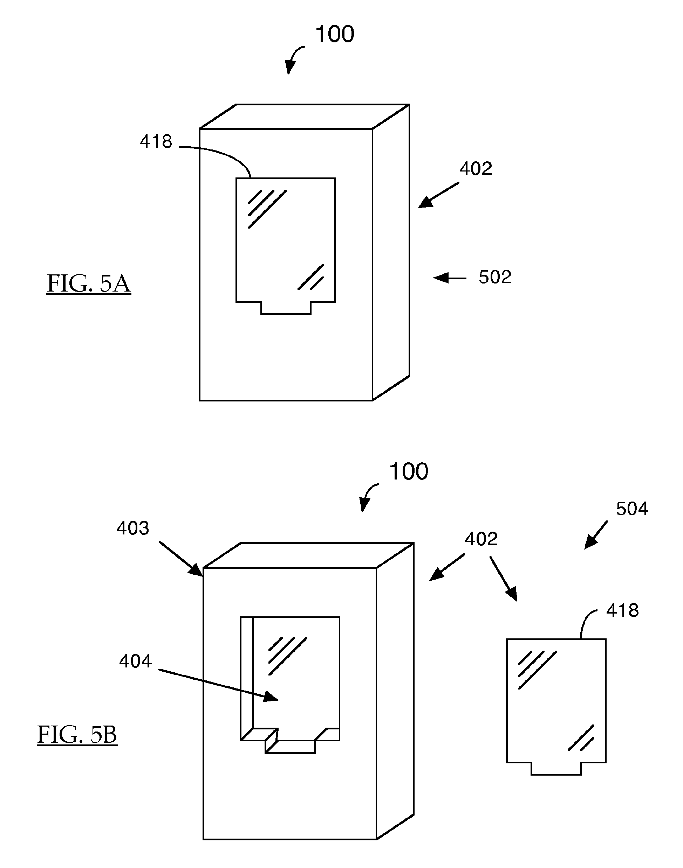

A barrier or cover 418 is provided and typically forms part of the housing 402 (and may take the form of a battery cover 418 as shown in the illustrated example), which may restrict access to the media port 406 and media card 408. As illustrated in Figures 5A and 5B, the cover 418 may be moved (for example, intentionally by the user in order to access the chamber 404, or as a result of a collision involving the device 100) from a closed or secure position 502, typically in engagement with the main body 403 of the housing 402, to an open position 504, typically remote from the main body 403 of the housing 402. In alternate configurations, the cover 418 may be in hinged or pivotal engagement to the main body 403 of the housing 402.

As will be understood, the cover 418, compartment 404 and power interface 132 are configured to release the battery 130 when the device 100 impacts an object, such as the ground, with sufficient force. By passively ejecting the battery 130, the device 100 can dissipate some of the collision energy from the impact in order to minimize damage suffered by the device 100.

As will be understood, in the closed position 502, the chamber 404 is typically closed or sealed, offering protection and preventing access to the components within the chamber 404, including the media port 406, media card 408, and the battery 130. In the open position 504, the user may access and physically interact with such components.

A freefall detector or sensor 420, is also provided, and may include or comprise an accelerometer operatively coupled to the CPU 102. The detector 420 is mounted to or otherwise operatively coupled to the housing 402, and may detect when the device 100 is in freefall. For example, the LIS302DL sensor manufactured by ST MICROELECTRONICS^{™} has built in free fall detection capability. The CPU 102 is in electrical communication with the detector 420, and is thereby able to receive freefall signals therefrom corresponding to when the electronic device 100 is in freefall, the significance of which will be described in greater detail, below.

Alternatively, an accelerometer such as the AXDL340 sensor manufactured by ANALOG DEVICES^{™} may be used. However, such sensor does not have built-in free fall detection, and accordingly, as would be understood it would be necessary to provide the CPU 102 with appropriate program code to analyze signals from the accelerometer and determine when the device 100 is in freefall. Such program code may include code for determining from acceleration rate signals from the accelerometer when the device is considered to be subject to an unintended acceleration such as when the device is accidentally dropped by a user or thrown, possibly as a vandalous act, for example. The program code may include a threshold level set for a detected rate of acceleration at and/or above which it is determined that the device is subject to an unintended, i.e. potentially damaging, rate of acceleration that may lead to the problems as aforesaid.

A media memory preservation application 430 stored as computer program instructions within flash memory 108 for execution by the CPU 102. Flash memory 108 comprises various other program code, such as other software applications, although these are not specifically shown for purposes of simplicity of illustration. Memory storage 105 also accessible by the CPU 102 may also include high speed cache memory 440.

In an alternate configuration, it may be desirable to mount a freefall detector 420 to a holster together with a power source for the device 100 (rather than in the device 100), and operatively couple the detector to the CPU 102, possibly using Bluetooth or other wireless technology as will be understood.

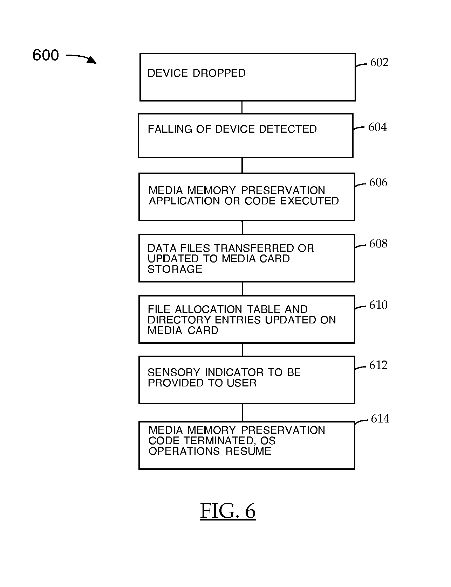

Referring now to FIG. 6, there is shown a method 600 of preserving or maintaining the data integrity of the media card 408 of mobile device 100.

In operation, the method 600 is initiated by the falling of the electronic device 100 (Block 602). This may happen, for example, as a result of the user dropping the device 100 or the device 100 being knocked from a resting place. While falling, the detector 420 detects that the device 100 is in freefall, and the CPU 102 determines same pursuant to communication with detector 420 (Block 604).

As will be understood, the detector 420 is preferably configured to generate an interrupt signal to the CPU 102 (and the operating system 103) when a freefall condition is detected (although alternate configurations for generating an interrupt are possible).

Upon receipt of the interrupt signal, the operating system 103 is programmed to execute the media memory preservation application 430 (Block 606). The preservation application 430 is programmed to cause the operating system 103 to transfer or update to the media card storage 410 any data files 416 or data file segments currently in the cache 440 and designated for storage in the media storage 410 (Block 608). As well, the preservation application 430 is programmed to cause the operating system 103 to update the file allocation table 412 data (and any directory entries) (Block 610).

The application 430 may also be programmed to cause the operating system 103 to provide a sensory indicator to the user upon detection of the freefall of the device 100 (Block 612). Such sensory indicator may be in the form of an audible warning tone or beep emitted by the speaker 118. The media memory preservation application 430 is preferably then configured to end and the previously interrupted operating system 103 operations resume (Block 614).
Such operations may (but will not necessarily be) interrupted if the impact from the device 100 landing causes the battery 130 to be ejected and the power supply interrupted.

As will be understood, the detection of the freefall of the device 100 provides a short period of advance notice that the device 100 may suffer a significant impact from the drop, which may in turn cause the passive ejection of the battery 130 and corresponding power supply interruption or termination. By updating the data stored in the media storage 410 as well as the file allocation table 412 data (and any directory entries), if power supply is interrupted or terminated from the impact of the drop, data loss will be minimized or avoided.

Whilst the method 600 described with respect to figure 6 is based on the device 100 having a freefall detector 420 to detect when the device is in freefall having been dropped or knocked off a table by a user, for example, it will be understood that the method 600 is applicable in respect of other types of unintended or abnormal motion of the device such as the device 100 being thrown or the device being subject to a change in direction of movement. In the case of the device 100 being thrown, the use of an accelerometer rather than specifically a freefall detector would enable the accelerations to which the device 100 is subjected as a result of being thrown to be detected and a determination made as to whether such rate of acceleration amounts to a potentially damaging and thus unintended motion of the device. For example, a user holding the device 100 and swinging it playfully in their hand should not trigger a determination that the device is being subjected to an unintended motion. However, an act of throwing the device such as may be perpetrated by a thief or a vandal or some other unexpected action should result in such a determination. Thus, the program code of the device 100 may be programmed with a threshold level for the rate of acceleration detected by the accelerometer whereby if the detected rate equals and/or exceeds said threshold, a determination is made that the device is subject to an unintended motion and the steps of the method 600 of figure 6 applied accordingly.

In a not shown embodiment of the device, there is provided an inertia sensor including or comprising a gyroscope that is arranged to detect changes in direction of motion of the device, particularly sudden changes in direction of motion that might occur as a result of a vehicle in which the device is contained or mounted suffering a collision. The inertia sensor may be in addition to or replacement of the freefall and/or accelerometer as aforesaid. The program code of the device 100 may be programmed with a threshold level for the rate of change of movement detected by the inertia sensor whereby if the detected rate equals and/or exceeds said threshold, a determination is made that the device is subject to an unintended motion and the steps of the method 600 of figure 6 applied accordingly. Once again, the threshold should be chosen such that it does not enable normal expected motions of the device to be determined as unintended motions. For example, when the device is contained or mounted within a vehicle, normal movement of the vehicle such as cornering should not create a rate of change of direction signal that will be determined as potentially damaging or result in the memory management problems as discussed above.

In the case where the device 100 includes both a freefall sensor 420 or accelerometer and an inertia sensor, the device 100 may be arranged to implement the media memory preservation application 430 upon a first determination resulting from the signals from either of the freefall sensor/accelerometer or inertia sensor that the device 100 is subject to an unintended motion or to implement the media memory preservation application 430 only upon a determination from signals from both the freefall sensor/accelerometer and inertia sensor that the device 100 is subject to an unintended motion.

While the above description provides examples of various embodiments, it will be appreciated that some features and/or functions of the described embodiments are susceptible to modification without departing from the spirit and principles of operation of the described embodiments. Accordingly, what has been described above is intended to be illustrative of the technology and non-limiting.

## Claims

1. A method for maintaining data integrity of data stored on storage media (408) of an electronic device (100), the device having:
a detector (420) configured to detect when the electronic device (100) is moving; and
a processor (102) operatively coupled to the storage media (408) and to
the detector (420), the method comprising:
detecting when the electronic device (100) is moving; and
updating the data stored on the storage media (408) responsive to the detection that the device is moving.

2. The method as claimed in claim 1, wherein the step of detecting when the electronic device (100) is moving detects that the device (100) is accelerating.

3. The method as claimed in claim 2, wherein the step of detecting detects that the device (100) is accelerating at a rate above a threshold.

4. The method as claimed in claim 3, wherein the threshold is selected as a rate of acceleration that is indicative of unintended acceleration.

5. The method as claimed in any one of the preceding claims wherein the sensor is a freefall detector (420) detecting when the electronic device (100) is in freefall.

6. The method as claimed in any one of claims 1 to 3, wherein the step of detecting when the electronic device (100) is moving detects that the device (100) is subject to a change in direction of movement.

7. The method as claimed in claim 6, wherein the step of detecting detects that the device (100) is subject to a change in direction of movement at a rate of change above a threshold.

8. The method as claimed in claim 7, wherein the threshold is selected as a rate of change of direction of movement that is indicative of an unintended change of direction of movement.

9. The method as claimed in any one of claims 6 to 8, wherein the detector is an inertial detector that detects a change of direction of movement of the electronic device (100) irrespective of the effect of gravity.

10. The method as claimed in claim 9, wherein the inertial sensor is a gyroscope.

11. The method as claimed in any one of the preceding claims, wherein the data stored on the storage media (408) comprises file allocation table data (412) and wherein the step of updating comprises updating the file allocation table data (412).

12. The method as claimed in any one of the preceding claims, wherein the electronic device (100) further comprises a housing (402) and a power supply port (132) located within the housing and wherein the power supply port is configured to releasably receive a power supply module (130).

13. The method as claimed in claim 12, wherein the power supply module (130) comprises a battery and wherein the housing (402) comprises a compartment (404) and wherein the power supply port (132) is positioned within the compartment (404).

14. The method as claimed in any one of the preceding claims, further comprising providing a sensory indicator to the user upon detection of the acceleration of the electronic device (100).

15. The method as claimed in claim 14, wherein the sensory indicator comprises an audible tone.

16. An electronic device (100), comprising:
a housing (402);
a detector (420) operatively coupled to the housing (402) and
configured to detect when the electronic device (100) is moving;
a processor (102) operatively coupled to the detector (420); and
memory storage (106) accessible to the processor (102) and configured to store data and wherein the memory storage (106) is further configured to store program code (430) executable by the processor (102) for executing a media memory preservation application, and
wherein the media memory preservation application is configured to cause the processor to update the stored data.

17. The device as claimed in claim 16, wherein the processor (102) is responsive to the detector (420), and wherein the processor (102) is configured to execute the media memory preservation application (430) upon the detector (420) detecting that the device (100) is moving.

18. The device (100) as claimed in claim 16 or claim 17, wherein the detector (420) is configured to generate motion signals upon detecting that the device (100) is moving, and wherein the processor (102) is configured to receive the motion signals.

19. The device as claimed in claim 18, wherein the processor (102) is configured to execute the media memory preservation application (430) upon receiving the motion signals.

20. The device as claimed in any one of claims 16 to 19, further comprising a power supply port (132) located within the housing (402) and configured to releasably receive a power supply module (130).

21. The device (100) as claimed in claim 20, wherein the power supply port (132) is configured to release the power supply module (130).

22. The device (100) as claimed in claim 20 or claim 21, further comprising a compartment (404) within the housing (402), wherein the power supply port (132) is positioned within the compartment (404).

23. The device (100) as claimed in claim 22, further comprising a barrier (418) movable from a closed position to an open position, wherein in the closed position access to the compartment is (404) restricted.

24. The device (100) as claimed in claim 23, wherein the barrier (418) comprises a compartment cover.

25. The device (100) as claimed in any one of claims 16 to 24, wherein the memory storage comprises a storage media card (408).

26. The device (100) as claimed in claim 25, wherein the memory storage comprises a flash memory card.

27. The device (100) as claimed in any one of claims 16 to 26, wherein the stored data comprises a file allocation table (412).

28. The device (100) as claimed in any one of claims 16 to27, wherein the detector comprises a freefall detector (420) for detecting when the device (100) is in freefall.

29. The device (100) as claimed in any one of claims 16 to 28, wherein the detector comprises an accelerometer for detecting when the device (100) is subject to an acceleration.

30. The device (100) as claimed in any one of claims 16 to 27, wherein the detector comprises an inertial detector for detecting a change in a direction of movement of said device (100).

31. The device (100) as claimed in claim 30, wherein the inertial detector comprises a gyroscope.

32. A computer readable medium storing computer readable instructions executable by a processor of a computing system to cause said system to implement the steps of the method of any one of claims 1 to 15.

## Amended claims

### Amended claims in accordance with Rule 137(2) EPC.

**1.** A method for maintaining data integrity of data stored on storage media (408) of an electronic device (100), the device having:
a housing (402) ;
a detector (420) configured to detect when the electronic device (100) is moving;
a processor (102) operatively coupled to the storage media (408) and to the detector (420);
a power supply port (132) located within the housing;
wherein the power supply port is configured to releasably receive a power supply module (130); and
wherein the power supply port is configured to passively eject the power supply module (130) upon impact of the electronic device (100) with an object,
the method comprising:
detecting when the electronic device (100) is moving; and
updating the data stored on the storage media (408) responsive to the detection that the device is moving.

**2.** The method as claimed in claim 1, wherein the step of detecting when the electronic device (100) is moving detects that the device (100) is accelerating.

**3.** The method as claimed in claim 2, wherein the step of detecting detects that the device (100) is accelerating at a rate above a threshold.

**4.** The method as claimed in claim 3, wherein the threshold is selected as a rate of acceleration that is indicative of unintended acceleration.

**5.** The method as claimed in any one of the preceding claims wherein the sensor is a freefall detector (420) detecting when the electronic device (100) is in freefall.

**6.** The method as claimed in any one of claims 1 to 3, wherein the step of detecting when the electronic device (100) is moving detects that the device (100) is subject to a change in direction of movement.

**7.** The method as claimed in claim 6, wherein the step of detecting detects that the device (100) is subject to a change in direction of movement at a rate of change above a threshold.

**8.** The method as claimed in claim 7, wherein the threshold is selected as a rate of change of direction of movement that is indicative of an unintended change of direction of movement.

**9.** The method as claimed in any one of claims 6 to 8, wherein the detector is an inertial detector that detects a change of direction of movement of the electronic device (100) irrespective of the effect of gravity.

**10.** The method as claimed in claim 9, wherein the inertial sensor is a gyroscope.

**11.** The method as claimed in any one of the preceding claims, wherein the data stored on the storage media (408) comprises file allocation table data (412) and wherein the step of updating comprises updating the file allocation table data (412).

**12.** The method as claimed in in any one of the preceding claims, wherein the power supply module (130) comprises a battery and wherein the housing (402) comprises a compartment (404) and wherein the power supply port (132) is positioned within the compartment (404).

**13.** The method as claimed in any one of the preceding claims, further comprising providing a sensory indicator to the user upon detection of the acceleration of the electronic device (100).

**14.** The method as claimed in claim 13, wherein the sensory indicator comprises an audible tone.

**15.** An electronic device (100), comprising:
a housing (402);
a detector (420) operatively coupled to the housing (402) and
configured to detect when the electronic device (100) is moving;
a processor (102) operatively coupled to the detector (420);
a power supply port (132) located within the housing (402) and
configured to releasably receive a power supply module (130);
wherein the power supply port (132) is configured to passively eject the power supply module (130) upon impact of the electronic device (100) with an object;
memory storage (106) accessible to the processor (102) and configured to store data and wherein the memory storage (106) is further configured to store program code (430) executable by the processor (102) for executing a media memory preservation application, and
wherein the media memory preservation application is configured to cause the processor to update the stored data.

**16.** The device as claimed in claim 15, wherein the processor (102) is responsive to the detector (420), and wherein the processor (102) is configured to execute the media memory preservation application (430) upon the detector (420) detecting that the device (100) is moving.

**17.** The device (100) as claimed in claim 15 or claim 16, wherein the detector (420) is configured to generate motion signals upon detecting that the device (100) is moving, and wherein the processor (102) is configured to receive the motion signals.

**18.** The device as claimed in claim 17, wherein the processor (102) is configured to execute the media memory preservation application (430) upon receiving the motion signals.

**19.** The device (100) as claimed in any one of claims 15 to 18, wherein the power supply port (132) is configured to release the power supply module (130).

**20.** The device (100) as claimed in claim 18 or claim 19, further comprising a compartment (404) within the housing (402), wherein the power supply port (132) is positioned within the compartment (404).

**21.** The device (100) as claimed in claim 20, further comprising a barrier (418) movable from a closed position to an open position, wherein in the closed position access to the compartment is (404) restricted.

**22.** The device (100) as claimed in claim 21, wherein the barrier (418) comprises a compartment cover.

**23.** The device (100) as claimed in any one of claims 15 to 22, wherein the memory storage comprises a storage media card (408).

**24.** The device (100) as claimed in claim 23, wherein the memory storage comprises a flash memory card.

**25.** The device (100) as claimed in any one of claims 15 to 24, wherein the stored data comprises a file allocation table (412).

**26.** The device (100) as claimed in any one of claims 15 to 25, wherein the detector comprises a freefall detector (420) for detecting when the device (100) is in freefall.

**27.** The device (100) as claimed in any one of claims 15 to 26, wherein the detector comprises an accelerometer for detecting when the device (100) is subject to an acceleration.

**28.** The device (100) as claimed in any one of claims 15 to 25, wherein the detector comprises an inertial detector for detecting a change in a direction of movement of said device (100).

**29.** The device (100) as claimed in claim 28, wherein the inertial detector comprises a gyroscope.

**30.** A computer readable medium storing computer readable instructions executable by a processor of a computing system to cause said system to implement the steps of the method of any one of claims 1 to 14.
